# EUROPÄISCHE PATENTANMELDUNG

(11) **EP 0 820 909 A2**
(43) Veröffentlichungstag der Anmeldung: **28.01.1998**
(21) Anmeldenummer: 97110696.8
(22) Anmeldetag: 01.07.1997
(51) Int. Cl.: B60R 22/02

(54) **Sicherheitsgurtsystem für ein Kraftfahrzeug, insbesondere für ein Zweirad**

(30) Priorität: 24.07.1996 DE 19629878
(71) Anmelder: Bayerische Motoren Werke Aktiengesellschaft, 80788 München (DE)
(72) Erfinder: Müller, Helmut, 84513 Töging (DE); Theobald, Markus, 80804 München (DE); Thoma, Rainer, 81371 München (DE)

(57) **Zusammenfassung**

Es wird ein Sicherheitsgurtsystem für ein Kraftfahrzeug, insbesondere für ein Zweirad, beschrieben, bei dem zum Fixieren einer Person (19) auf einem Fahrzeugsitz (9) mit einer Rückenlehne (10) zwei voneinander unabhängige Gurtbänder (3,11) verwendet werden. Die beiden Gurtbänder (3,11) sind so am Fahrzeugrahmen angebracht, daß die Person (19) jeweils an zwei fahrzeugfesten Punkten in Schulternähe (5,15) und an mindestens zwei fahrzeugfesten Punkten in Beckennähe (8,18) am Fahrzeugsitz (9) fixierbar ist. Das Sicherheitsgurtsystem kann zum Beispiel aus zwei sogenannten Dreipunktgurten bestehen, die im wesentlichen symmetrisch zum Fahrzeugsitz (9) links und rechts von diesem angebracht sind.

## Beschreibung

Die Erfindung betrifft ein Sicherheitsgurtsystem für ein Kraftfahrzeug, insbesondere für ein Zweirad, nach dem Oberbegriff des Hauptanspruchs.

Die deutsche Offenlegungsschrift 25 31 490 beschreibt eine Sicherheitsgurt-Vorrichtung für Motorradfahrer mit Gurtaufrollautomaten und Gurtschlössern unter dem Sattel oder unter der Sitzbank. Zum Anschnallen jeder Person auf dem Motorrad werden jeweils zwei Gurtbänder benötigt, wobei jedes Gurtband auf einer Seite der Sitzbank über einen Gurtaufrollautomaten befestigt ist und auf der anderen Seite der Sitzbank in ein dort befestigtes Gurtschloß eingesteckt werden kann. Nachteilig an dieser Sicherheitsgurt-Vorrichtung ist, daß die angeschnallte Person selbst bei blockiertem Gurtaufrollautomaten nur ungenügend am Fahrzeug festgelegt wird. Außerdem sind die Gurtbänder nur schwierig und umständlich anzulegen.

Weitere bekannte Sicherheitsgurtsysteme, als Vierpunktgurte oder Hosenträgergurte bekannt, sind nicht mit einer Hand anzulegen. Das hat zum Beispiel bei einem Zweirad den Nachteil, daß der Fahrer die Lenkvorrichtung des Zweirads loslassen muß und deshalb nicht mehr in der Lage ist, dieses ohne Stützeinrichtung beim Anlegen des Sicherheitsgurtsystems zu halten.

Deshalb ist es Aufgabe der Erfindung, ein Sicherheitsgurtsystem zum Fixieren einer Person auf einem Fahrzeugsitz bereitzustellen, das den Körper der Person an mindestens vier fahrzeugfesten Punkten fixiert und gleichzeitig bequem und einfach angelegt werden kann. Das Anlegen soll mit einer Hand bewerkstelligt werden können.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung zeichnet sich das Sicherheitsgurtsystem für ein Kraftfahrzeug, insbesondere für ein Zweirad, dadurch aus, daß zum Fixieren einer Person mit zwei unabhängigen Gurtbändern auf einem Sitz mit einer Rückenlehne mindestens ein Gurtband über eine fahrzeugfeste Gurtumlenkeinrichtung verläuft und daß beide Enden dieses Gurtbandes am Fahrzeug angebracht sind.

Das hat den Vorteil, daß das Sicherheitsgurtsystem mit zwei voneinander unabhängigen Gurtbändern mit einer Hand angelegt werden kann, indem die Gurtbänder nacheinander angelegt werden. Desweiteren wird der Körper der mit dem Sicherheitsgurtsystem angeschnallten Person, zumindest wenn bestimmte Fahrbedingungen auftreten, durch die mindestens vier fahrzeugfesten Punkte des Sicherheitsgurtsystems auf dem Sitz mit einer Rückenlehne fixiert.

Bei einer bevorzugten Ausführung der Erfindung ist die fahtzeugfeste Gurtumlenkeinrichtung auf der gleichen Seite der Person am Fahrzeug befestigt, wie das erste Ende des Gurtbandes und das zweite Ende dieses Gurtbandes ist ebenfalls auf dieser Seite der Person am Fahrzeug angebracht. Das hat den Vorteil, daß die beiden voneinander unabhängigen Gurtbänder die angeschnallte Person ergonomisch günstig zurückhalten.

Bei einer weiteren bevorzugten Ausführung der Erfindung ist die fahrzeugfeste Gurtumlenkeinrichtung höhenverstellbar am Fahrzeug befestigt. Das hat den Vorteil, daß das Sicherheitsgurtsystem auf die Körpergröße der angeschnallten Person einstellbar ist.

Bei einer vorteilhaften Ausführung der Erfindung ist mindestens ein Gurtband mit seinem ersten Ende über eine Sicherheitsgurtaufroll- und -blockiereinrichtung am Fahrzeug angebracht. Dadurch kann sich der Fahrer vorteilhafterweise während der Fahrt bewegen und ist nur festgelegt beim Auftreten von Trägheitskräften, die denen gleichen, die bei einem Unfall auftreten.

Bei einer weiteren vorteilhaften Ausführung der Erfindung ist mindestens ein Gurtband mit einer Gurtstrammeinrichtung versehen. Das hat den Vorteil, daß die angeschnallte Person noch mehr am Sitz bzw. an der Rückenlehne fixiert werden kann, indem die Gurtlose ausgeschaltet wird.

Bei einer weiteren bevorzugten Ausführung der Erfindung ist die Gurtumlenkeinrichtung in der Sicherheitsgurtaufroll- und -blockiereinrichtung eingebaut. Bei sitzintegrierten Sicherheitsgurtsystemen entsteht so vorteilhafterweise ein einfacher Aufbau.

Bei einer weiteren vorteilhaften Ausführung der Erfindung verhindert eine Wegfahrsperre das Fahren oder das Inbetriebsetzen des Fahrzeuges, wenn die Sicherheitsgurtbänder des Fahrzeugs nicht angelegt sind. Das hat den Vorteil, daß das Sicherheitsgurtsystem beim Fahren des Fahrzeugs immer angelegt sein muß. Dabei kann die Wegfahrsperre des Fahrzeugs bei nicht angelegtem Sicherheitsgurtband zum Beispiel den Anlasser, die Zündung oder eine Fahrzeugbremse entsprechend steuern, so daß das Inbetriebsetzen des Fahrzeugs verhindert wird. Die Wegfahrsperre kann zum Beispiel aufgrund eines Sensorsignals freigegeben werden, das von der in das Gurtschloß eingesteckten Gurtschloßzunge ausgelöst wird.

Eine weitere bevorzugte Ausführung der Erfindung sieht vor, daß das Sicherheitsgurtsystem ein akustisches und/oder optisches Warnsignal abgibt, wenn der Sicherheitsgurt in einem fahrbereiten Zustand des Fahrzeugs nicht angelegt ist. Das hat den Vorteil, daß der Fahrer an das Anlegen des Sicherheitsgurtes erinnnert wird.

Bei einer weiteren vorteilhaften Ausführung der Erfindung besitzt das Sicherheitsgurtsystem einen Kraftbegrenzer, der das Gurtband bei Einwirkung einer bestimmten Grenzkraft und nach einer bestimmten Zeit definiert entlastet. Wird das Gurtband auf eine solche Weise entlastet, so hat das den Vorteil, daß die Rückhaltekräfte günstig beeinflußt werden können. Eine Rückhaltekraftbegrenzung für das Gurtband kann zum Beispiel durch definierte Verformung der Umlenkeinrichtung erreicht werden. Desweiteren ist es bekannt, Kraftbegrenzer in Sicherheitsgurtaufroll- und -blockiereinrichtungen zu integrieren oder in deren Verbindung mit dem Fahrzeugrahmen.

Ein bevorzugtes Ausführungsbeispiel der Erfindung ist in der nachfolgenden Beschreibung mit der zugehörigen Zeichnung dargestellt. Es zeigen:
- Figur 1: eine perspektivische Ansicht des Sicherheitsgurtsystems, eingebaut in einen Personenkraftwagen,
- Figur 2: eine perspektivische Gesamtansicht eines Zweirads mit einem Fahrer und angelegtem Sicherheitsgurtsystem.

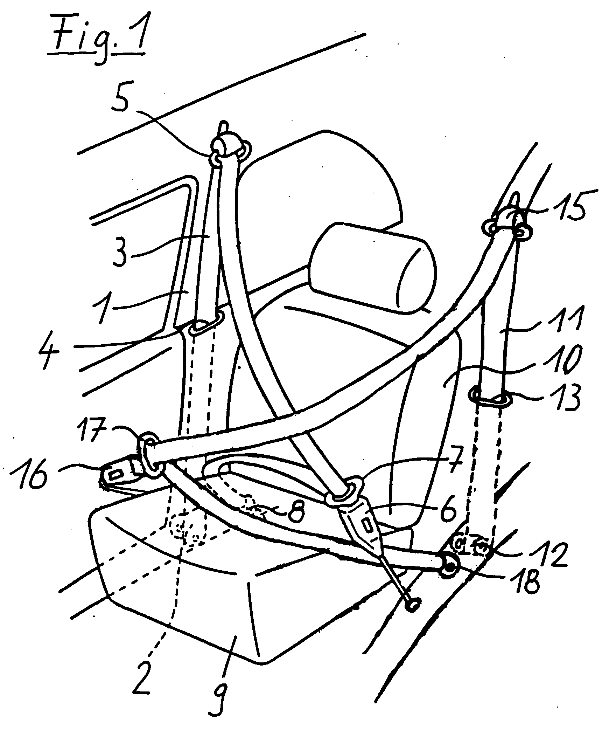

Figur 1 zeigt einen Abschnitt einer Seitenwand 1 eines Personenkraftwagens, an der ein Sicherheitsgurtaufroll- und -blockierautomat 2 angebracht ist. Der Sicherheitsgurtaufroll- und -blockierautomat 2 dient zum Aufrollen und Blockieren eines Sicherheitsgurtbandes 3, das wie dieser unterhalb einer Innenverkleidung der Seitenwand 1 des Personenkraftwagens angebracht ist. Der Sicherheitsgurtaufroll- und -blockierautomat und ein Teil des Sicherheitsgurtbandes 3 ist aus diesem Grund unsichtbar und deshalb gestrichelt gezeichnet. Durch einen Schlitz 4 tritt das Sicherheitsgurtband 3 in den Innenraum des Personenkraftwagens ein und verläuft an der Seitenwand 1 nach oben, wo es in einer fahrzeugfesten Gurtumlenkeinrichtung 5 geführt wird. Von dieser Gurtumlenkeinrichtung 5 verläuft es weiter zu einem ebenfalls fahrzeugfesten Gurtschloß 6, wo es mit einer Gurtschloßzunge 7, durch die das Sicherheitsgurtband 3 hindurchgeschleift ist, eingesteckt ist. Vom Gurtschloß 6 aus wird das Sicherheitsgurtband 3 weitergeführt bis zu einem fahrzeugfesten Befestigungspunkt 8 auf der gleichen Seite eines Fahrzeugsitzes 9 mit Rückenlehne 10 wie der Sicherheitsgurtaufroll- und -blockierautomat 2.

Das Sicherheitsgurtband 3 verläuft in der Weise eines sogenannten Dreipunktgurtes über den Fahrzeugsilz 9, das heißt Sicherheitsgurtaufroll- und -blockierautomat 2, in dem ein erstes Ende des Sicherheitsgurtbandes 3 angebracht ist, Gurtumlenkeinrichtung 5 und fahrzeugfester Befestigungspunkt 8, an dem ein zweites Ende des Sicherheitsgurtbandes 3 befestigt ist, befinden sich auf einer Seite des Fahrzeugsitses 9. Auf der anderen Seite des Fahrzeugsitzes 9 ist das zugehörige Gurtschloß 6 fahrzeugfest angebracht.

Gemäß der Erfindung wird dieser sogenannte Dreipunktgurt mit automatischer Aufroll- und -blockiereinrichtung ergänzt durch einen weiteren Sicherheitsgurt. Dieser Sicherheitsgurt kann, wie gezeichnet, ein weiterer Dreipunktgurt mit automatischer Aufroll- und -blockiereinrichtung sein. Es ist aber auch möglich, hierfür einen sogenannten Zweipunktgurt zu verwenden, der sich dann allerdings diagonal, von oben nach unten oder von unten nach oben über den Oberkörper des nicht gezeichneten Fahrzeugsitzbenutzers erstrecken muß. Zweipunktgurt oder aber weiterer Dreipunktgurt können auch ohne Gurtaufroll- und -blockiereinrichtung am Fahrzeug angebracht sein.

Der weitere sogenannte Dreipunktgurt ist, wie gezeichnet, mit einem ersten Ende des weiteren Sicherheitsgurtbandes 11 über einen weiteren Sicherheitsgurtaufroll- und -blockierautomaten 12 fahrzeugfest an der Seite des Fahrzeugsitzes 9 angebracht, an der das Gurtschloß 6 sitzt. Das weitere Sicherheitsgurtband 11 verläuft unsichtbar (gestrichelt gezeichnet) unter einer nicht gezeichneten Verkleidung und tritt aus dieser durch einen weiteren Schlitz 13 in den Innenraum des Personenkraftwagens aus, zu einer weiteren fahrzeugfesten Gurtumlenkeinrichtung 15 hin. Die weitere Gurtumlenkeinrichtung 15 liegt im wesentlichen seitlich des oberen Teils der Rückenlehne 10. Ein weiteres Gurtschloß 16, auf der anderen Seite des Fahrzeugsitzes 9, fahrzeugfest im unteren Bereich angebracht, legt das weitere Sicherheitsgurtband 11 über eine weitere Gurtschloßzunge 17 in der Nähe der Seitenwand 1 des Personenkraftwagens fest, von wo aus das weitere Sicherheitsgurtband 11 über den Fahrzeugsitz 9 hinweg zurückverläuft, zu einem weiteren zweiten fahrzeugfesten Befestigungspunkt 18 auf der Seite des Gurtschlosses 6 am Fahrzeugsitz 9.

Auf diese Weise sind die beiden sogenannten Dreipunktgurte zur Hochachse in der Mitte des Fahrzeugsitres 9 und dessen Rückenlehne 10 im wesentlichen spiegelsymmetrisch angebracht und können mit einer Hand nacheinander angelegt werden. Eine andere Hand der nicht gezeichneten, den Fahrzeugsitz 9 benutzenden Person, kann zum Beispiel am nicht gezeichneten Lenkrad des Personenkraftwagens verbleiben. Die nicht gezeichnete Person ist durch die beiden so geführten Sicherheitsgurtbänder 3, 11 über mindestens vier Punkte im Fahrzeug, mindestens zwei in Beckennähe und zwei in Schulternähe fixierbar.

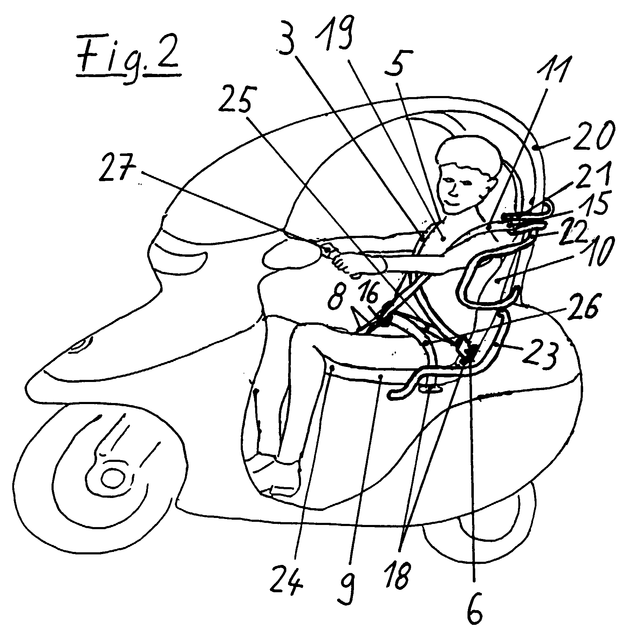

Figur 2 zeigt das Sicherheitsgurtsystem, ausgebildet an einem Zweirad. Es ist ergänzt durch weitere zweiradspezifische Sicherheitseinrichtungen. Der Fahrer 19 sitzt auf dem Fahrzeugsitz 9 mit Rückenlehne 10 und hat beide Sicherheitsgurtbänder 3, 11 entsprechend der Figur 1 angelegt. Ein Fahrzeugrahmen 20 umgibt den Fahrer 19 teilweise. Im Falle eines Unfalles wird der Fahrer 19 durch den Fahrzeugrahmen 20 geschützt und zwar deshalb, weil er durch das Sicherheitsgurtsystem am Fahrzeugsitz 9 mit Rückenlehne 10 über mindestens vier Punkte im Fahrzeug, mindestens zwei in Beckennähe 8, 18 und zwei in Schulternähe 5, 15 fixiert ist. In dieser Figur nicht sichtbare Gurtstrammer verbessern die Fixierung des Fahrers 19.

Im normalen Fahrbetrieb kann sich der Fahrer 19 aufgrund der Verwendung von in Figur 2 nicht sichtbaren automatischen Aufroll- und -blockiereinrichtungen für die beiden sogenannten Dreipunktgurte im wesentlichen frei auf dem Fahrzeugsitz 9 bewegen, was zum sicheren Steuern eines Zweirades beiträgt und durch dieses Gurtsystem ermöglicht wird.

Als weitere Sicherheitseinrichtungen sind an dem Fahrzeugrahmen 20 besondere Gurtumlenkeinrichtungen 21, ein Paar Schulterbügel 22 und ein Paar Beckenbügel 23 angebracht. Zusätzlich besitzt der Fahrzeugsitz 9 im Schrittbereich des Fahrers 19 eine sich nach oben erstreckende Rampe 24. Diese verhindert, daß der Fahrer 19 bei einem Unfall unter den Beckengurten 25, 26 der sogenannten Dreipunktgurte hindurchtauchen kann. Die Rampe 24 ist am Fahrzeugrahmen 20 unter dem Fahrzeugsitz 9 ausgebildet. Der Fahrzeugsitz überdeckt die Rampe 24 mit einer Ausformung.

Dadurch, daß der Fahrer 19 im Fall eines Unfalls durch das Sicherheitsgurtsystem am Fahrzeugsitz 9 fixiert wird, schützt ihn der Fahrzeugrahmen 20 mit den Schulterbügeln 22 und den Beckenbügeln 23 vor Stoßverletzungen und es kann am Fahrzeug eine zusätzlich schützende Knautschzone ausgebildet werden. Die Schulter- 22 und Beckenbügel 23 verhindern mit dem Fahrzeugrahmen 20 und den beiden sogenannten Dreipunktgurten, daß sich der Fahrer 19 aus der Fahrzeugkontur herausbewegt.

Fahrzeugsitz 9, Rampe 24, Rückenlehne 10, Schulterbügel 22 und Beckenbügel 23 sind wie die Gurtumlenkeinrichtungen 21 rahmenfest montiert. Deshalb kann, um das Fahrzeug der Körpergröße des Fahrers 19 anzupassen, die Lenkeinrichtung 27, an der alle Bedienelemente angebracht sein können, zum Fahrer 19 hin verstellbar gestaltet sein.

Die hier nicht sichtbaren automatischen Aufroll- und -blockiereinrichtungen für die Sicherheitsgurtbänder 3, 11 können durch eine Lagesteuerung ergänzt sein, die bei bestimmten Fahrzuständen das Blockieren der Sicherheitsgurtbänder 3, 11 verhindert. So ist es möglich, Kurvenschräglagen zu fahren, ohne daß das Sicherheitsgurtsystem blockiert. Die Gurtumlenkeinrichtungen 21 ermöglichen aufgrund ihrer Ausbildung eine Niveaubegrenzung der Sicherheitsgurtbandkräfte. Überschreiten die Kräfte auf die Sicherheitsgurtbänder 3, 11 einen bestimmten Wert, so verformen sich die Gurtumlenkeinrichtungen 21 unter Abstützung an dem Fahrzeugrahmen 20 und begrenzen die Gurtbandkräfte.

Das Anlegen des Sicherheitsgurtsystems ist für den Fahrer 19 mit einer Hand möglich, indem er auf dem Fahrzeugsitz 9 sitzend zuerst das Sicherheitsgurtband 3 im Gurtschloß 6 verriegelt und dann das weitere Sicherheitsgurtband 11 ins weitere Gurtschloß 16 einsteckt. Die andere Hand des Fahrers 19 kann so an der Lenkeinrichtung 27 verbleiben, was nötig ist, um ein Umfallen des Zweirades zu verhindern und falls notwendig, die Bremse zu betätigen oder das Fahrzeug zu stabilisieren. Durch die feste Verbindung von Rückenlehne 10, Fahrzeugsitz 9, Schulterbügeln 22, Beckenbügeln 23 und Gurtumlenkeinrichtungen 21 mit dem Fahrzeugrahmen 20 kann die Anbindung der Bauteile einfach und kostengünstig erfolgen, während gleichzeitig die bei einem Unfall auftretenden Kräfte direkt in den Fahrzeugrahmen 20 geleitet werden.

## Patentansprüche

1. Sicherheitsgurtsystem für ein Kraftfahrzeug, insbesondere für ein Zweirad, zum Fixieren einer Person (19) auf einem Fahrzeugsitz (9), zumindest wenn bestimmte Fahrbedingungen auftreten, mit zwei voneinander unabhängigen Sicherheitsgurtbändern (3, 11), von denen jeweils eines auf einer Seite der Person (19) mit seinem ersten Ende am Fahrzeug angebracht ist und auf der anderen Seite durch ein am Fahrzeug angebrachtes Gurtschloß (6, 16) über eine Gurtschloßzunge (7, 17) festgelegt werden kann, dadurch gekennzeichnet, daß zum Fixieren der Person (19) auf dem Fahrzeugsitz (9) mit einer Rückenlehne (10) mindestens ein Sicherheitsgurtband (3, 11) über eine fahrzeugfeste Gurtumlenkeinrichtung (5, 15, 21) verläuft und daß ein zweites Ende dieses Sicherheitsgurtbandes (3, 11) ebenfalls am Fahrzeug angebracht ist.

2. Sicherheitsgurtsystem nach Anspruch 1, dadurch gekennzeichnet, daß die fahrzeugfeste Gurtumlenkeinrichtung (5, 15, 21) und das zweite Ende des Sicherheitsgurtbandes (3, 11) auf der gleichen Seite der Person (19) am Fahrzeug befestigt sind, wie das erste Ende des Sicherheitsgurtbandes (3, 11).

3. Sicherheitsgurtsystem nach einem der Ansprüche 1 oder 2, dadurch gekennzeichnet, daß die fahrzeugfeste Gurtumlenkeinrichtung (5, 15, 21) höhenverstellbar am Fahrzeug befestigt ist.

4. Sicherheitsgurtsystem nach einem der Ansprüche 1 bis 3, dadurch gekennzeichnet, daR mindestens ein Sicherheitsgurtband (3, 11) mit seinem ersten Ende über eine Sicherheitsgurtaufroll- und -blockiereinrichtung (2, 12) am Fahrzeug angebracht ist.

5. Sicherheitsgurtsystem nach einem der Ansprüche 1 bis 4, dadurch gekennzeichnet, daß mindestens ein Sicherheitsgurtband (3, 11) mit einer Gurtstrammeinrichtung versehen ist.

6. Sicherheitsgurtsystem nach einem der Ansprüche 1 bis 5, dadurch gekennzeichnet, daß die Gurtumlenkeinrichtung (5, 15, 21) in der Sicherheitsgurtaufroll- und -blockiereinrichtung (2, 12) eingebaut ist.

7. Sicherheitsgurtsystem nach einem der Ansprüche 1 bis 6, dadurch gekennzeichnet, daß mindestens Teile davon sitzintegriert sind.

8. Sicherheitsgurtsystem nach einem der Ansprüche 1 bis 7, dadurch gekennzeichnet, daß eine Wegfahrsperre das Fahren oder das Inbetriebsetzen des Fahrzeugs verhindert, wenn die Sicherheitsgurtbänder (3, 11) nicht angelegt sind.

9. Sicherheitsgurtsystem nach einem der Ansprüche 1 bis 8, dadurch gekennzeichnet, daß ein akustisches und/oder optisches Warnsignal abgegeben wird, wenn die Sicherheitsgurtbänder (3, 11) in einem fahrbereiten Zustand des Fahrzeuges nicht angelegt sind.

10. Sicherheitsgurtsystem nach einem der Ansprüche 1 bis 9, dadurch gekennzeichnet, daß mindestens eines der Sicherheitsgurtbänder (3, 11) durch einen Kraftbegrenzer bei Einwirkung einer bestimmten Grenzkraft und nach einer bestimmten Zeit definiert entlastet wird.
